# EUROPEAN PATENT SPECIFICATION

(11) **EP 3 153 674 B1**
(45) Date of publication and mention of the grant of the patent: **18.07.2018**
(21) Application number: 16192582.1
(22) Date of filing: 06.10.2016
(51) Int. Cl.: F01D 25/30, F02K 1/48

(54) **INTEGRATED TURBINE EXHAUST CASE MIXER DESIGN**
INTEGRIERTES TURBINENABGASGEHÄUSEMISCHERDESIGN
MELANGEUR ET CARTER D'ECHAPPEMENT DE TURBINE INTEGRES

(30) Priority: 08.10.2015 US 201562238898 P
(43) Date of publication of application: 12.04.2017
(73) Proprietor: Pratt & Whitney Canada Corp., Longueuil, Québec J4G 1A1 (CA); Jivan, Mihai, Longueuil, Quebec J4G 1A1 (CA)
(72) Inventor: TURCOTTE, Herve, (01BE5) Longueuil, Québec J4G 1A1 (CA); TROTTIER, Daniel, (01BE5) Longueuil, Québec J4G 1A1 (CA); SUMMERS-LEPINE, Daniel, (01BE5) Longueuil, Québec J4G 1A1 (CA)
(74) Representative: Dehns

(56) References cited:
- WO-A1-00/40851
- US-A- 4 335 801
- US-A1- 2010 031 631
- US-A1- 2011 036 068

## Description

### TECHNICAL FIELD

The application relates generally to gas turbine engines and, more particularly, to an integrated gas turbine exhaust case (TEC) mixer.

### BACKGROUND

Integrated turbine exhaust case mixers typically comprise struts extending between the mixer lobe valleys and an inner shroud. Nominally, such a design is not considered structurally robust since radial operational loading are directed through the struts to non-structural and flexible structures of both the inner shroud and the mixer valleys. Heretofore, high resulting tensile stresses under operational loading have, thus, limited the durability of conventional exhaust mixers.

A turbine exhaust case mixer having the features of the preamble of claim 1 is disclosed in US 2010/0031631 A1. A further turbine exhaust case multi-lobe mixer is disclosed in US 2011/0036068 A1.

### SUMMARY

In accordance with the invention, there is provided a turbine exhaust case (TEC) mixer as set forth in claim 1.

The invention also provides a gas turbine engine as set forth in claim 9.

### DESCRIPTION OF THE DRAWINGS

Reference is now made to the accompanying figures, in which:
Fig. 1 is a schematic cross-section view of a turbofan gas turbine engine;
Fig. 2 is a front isometric view of an integrated TEC-Mixer (ITM) forming part of the engine shown in Fig. 1;
Fig. 3 is a front isometric enlarged view of a strut depending radially inwardly from a valley of an inner lobe of the mixer of the ITM shown in Fig. 2;
Fig. 4 is a front isometric cross-section view illustrating the transition between one inner lobe and an associated strut;
Fig. 5 is a front isometric cross-section view similar to Fig. 4 but illustrating the wall thickness transition between the strut walls, the valley and the radial wall of the lobe;
Fig. 6 is a front isometric cross-section view similar to Figs. 4 and 5 but illustrating the off-centered positioning of the strut relative to the valley of the inner lobe;
Fig. 7 is a front isometric cross-section view similar to Figs 4-6 but illustrating the positioning of the center of the fillet radii in relation to the distance between the walls of the struts and the corresponding walls of the lobe;
Fig.8 is an enlarged front isometric view illustrating the fillet radii between the strut and the lobe along the axial and tangential directions;
Fig. 9 is a front isometric cross-section view of a hollow TEC strut;
Fig. 10 is a bottom isometric view illustrating a cooling opening at the base of a hollow TEC strut;
Fig. 11 is an isometric view illustrating internal fillet radii at the radially outer and radially inner end of the strut;
Fig. 12 is an isometric view illustrating a method of joining a strut to the rest of the ITM structure; and
Fig .13 is a front isometric view illustrating a weld assembly between adjacent ITM sectors.

### DETAILED DESCRIPTION

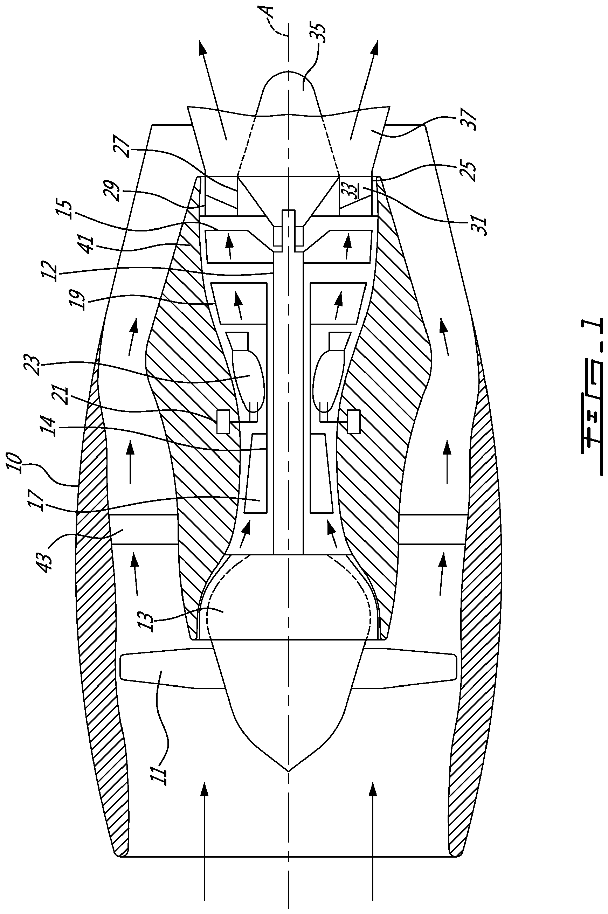

Fig. 1 illustrates an example of a turbofan gas turbine engine generally comprising a housing or nacelle 10; a low pressure spool assembly 12 including a fan 11, a low pressure compressor 13 and a low pressure turbine 15; a high pressure spool assembly 14 including a high pressure compressor 17, and a high pressure turbine 19; and a combustor 23 including fuel injecting means 21.

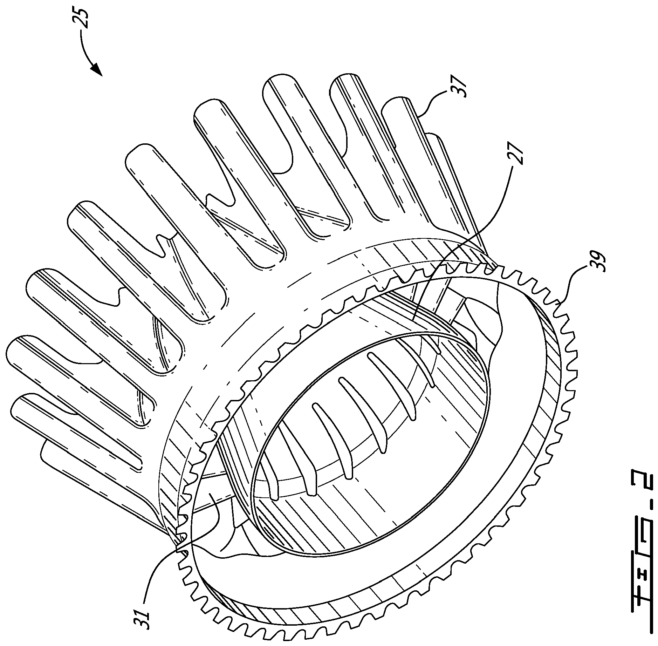

Referring to Figs. 1 and 2, the gas turbine engine 10 further comprises an integrated turbine exhaust case (TEC)-Mixer (ITM) 25 disposed immediately downstream of the last stage of low pressure turbine blades for receiving hot gases from the low pressure turbine 15 and exhausting the hot gases to the atmosphere. The ITM 25 comprises an annular inner shroud 27 (an inner cone in the illustrated embodiment) concentrically mounted about the central axis A (Fig. 1) of the engine, an annular outer shroud 29 concentrically mounted about the central axis A of the engine and the inner shroud 27. The inner and outer shrouds 27, 29 define therebetween an annular gaspath 33 for channelling the engine core flow. The inner and outer shrouds 27, 29 may be made out of sheet metal. A plurality of circumferentially spaced-apart struts 31 extends radially between the inner and outer shrouds 27, 29 across the gaspath 33. The struts 31 may not only serve as structural components, they may have an airfoil profile to serve as vanes for directing/straightening the incoming flow of hot gases. The struts 31 may also have a hollow body. The ITM 25 further comprises a multi-lobed mixer 37 integrated to the outer shroud 29 and extending axially rearwardly therefrom. The mixer 37 defines a plurality of circumferentially distributed lobes. The lobes include alternating outer and inner lobes. The outer lobes extend radially outwardly into the bypass passage of the engine while the inner lobes extend radially inwardly into the core flow path.

A mounting flange 39 may be provided at the front end of the outer shroud 29 for securing the ITM 25 to the engine case 41 (Fig.1) which, in turn, may be structurally connected to the nacelle 10 through a plurality struts 43 (Fig. 1) extending radially through the bypass passage of the engine. Referring more specifically to Fig. 1, it may also be appreciated that a tail cone 35 may be mounted to the aft end of the inner shroud 27 of the turbine exhaust case 25. The tail cone 35 may be bolted or other suitably removably connected to the inner shroud 27.

In operation, combustion gases discharged from the combustor 23 power the high and low pressure turbines 19 and 15, and are then exhausted into the annular hot gaspath 33 defined between the inner and outer shrouds 27, 29 of the ITM 25. The tangential components included in the exhaust gases may be de-swirled by the struts 31 or similar de-swirling airfoil structures which may be integrated in the ITM 25, and then the exhaust gases are discharged into the atmosphere through the mixer 37 which facilitates the mixing of the exhaust gases with the outer air flow from the bypass passage.

In an integrated mixer/TEC, the struts 31 extend between the inner lobes (outer radius) and the TEC shroud 27 (inner radius). Typically, the number of struts is less than the number of inner lobes (i.e. there is not a strut at each inner lobes). Nominally, this design is not robust structurally since radial operational loading will be directed through the TEC struts 31 to the weak and flexible structures of both the inner shroud 27 and the mixer inner lobes (forming part of the outer shroud 29). High resulting tensile stresses under operational loading will limit the durability of the nominal design.

The features described hereinbelow are designed to direct radial loads in the TEC struts to (1) the radial mixer lobe walls between alternating valleys and crests and (2) a reinforced inner shroud 27. The resulting load path directs radial loads into regions having low concentrations of compressive stress, thus, achieving durability under operational loads.

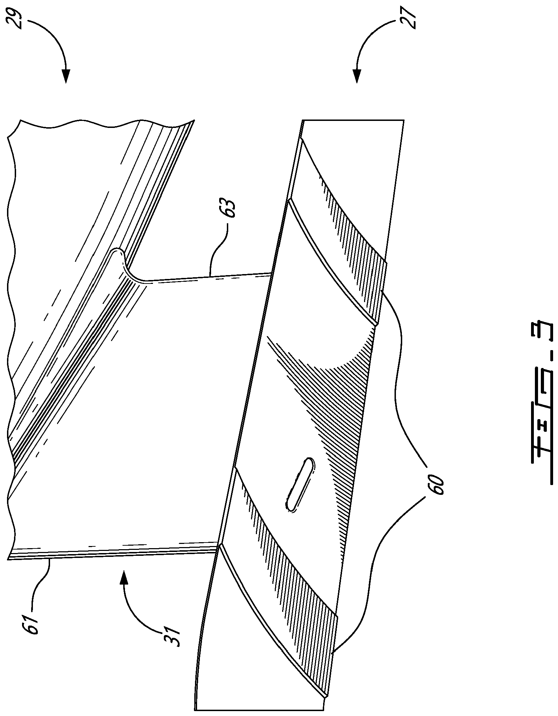

It is understood that various combinations and sub-combinations of the features described hereinbelow with reference to Figs. 3 to 13 are possible to provide added durability.

As shown in Fig. 3, the inner shroud 27 can be reinforced with stiffening bands 60 provided below the leading edge 61 and trailing edge 63 of the TEC struts 31. The stiffening bands 60 may be suitably joined to the radially inwardly facing surface of the inner shroud 27 at axial locations generally aligned with the leading and trailing edges of the struts 31. According to one embodiment, the bands 60 are provided by additive manufacturing. The bands 60 could also be brazed to the inner shroud 27. The bands 60 can be circumferentially continuous or segmented. According to one embodiment, the bands 60 are only provided underneath the struts (i.e. no band is provided on the inner shroud circumferentially between the struts).

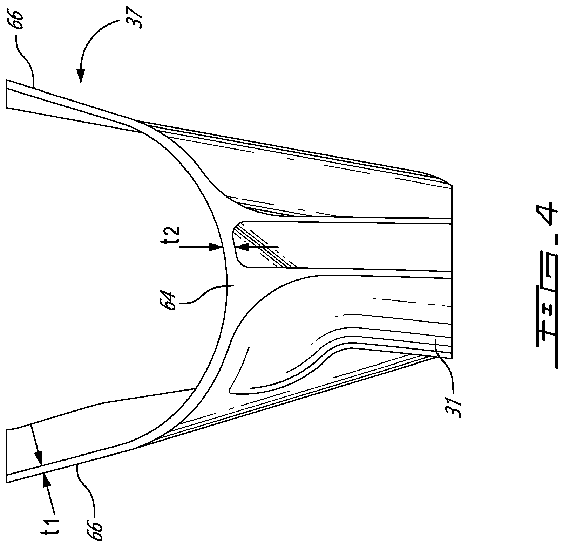

As shown in Fig. 4, each inner lobe of the mixer comprises a valley 64 and a pair of sidewalls 66 extending radially outwardly from the valley 64. The sidewalls 66 interconnect adjacent inner and outer lobes. As can be appreciated from Fig. 4, it is contemplated to provide additional thickness in the material forming the base of each of the valley 64 of the mixer inner lobe. Indeed, as shown in Fig. 4, the thickness t1 of the sidewalls 66 is less than the thickness t2 of the valley 64. That is the base of the valleys 64 where the struts 31 extend from could be made thicker than the radial mixer lobe walls 66. According to one possible embodiment, the ratio t1/t2 ranges from about 0.2 to about 1. In one particular application, the ratio t1/t2 is about 0.6.

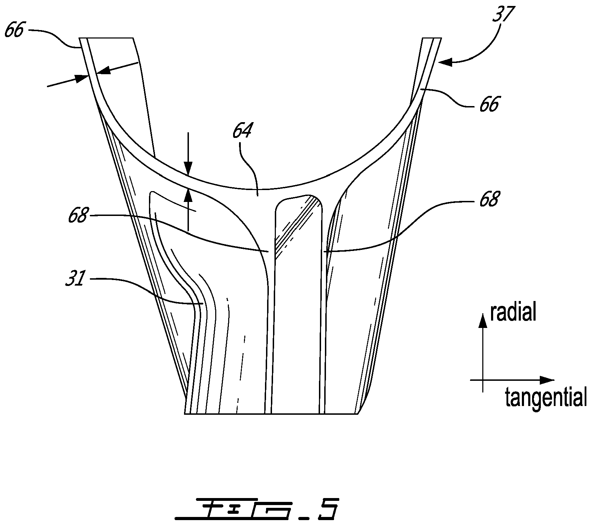

Fig. 5 shows the transition between a strut 31 and an inner lobe of the mixer 37. In the illustrated example, the strut 31 is hollow and has a pair of radially extending walls 68 merging at a radially outer end thereof with the valley 64 of the associated inner lobe of the mixer 37. As can be appreciated from Fig. 5, a smooth material thickness transition in the material between the radially extending walls 68 of the TEC strut 31 and the radial mixer lobe walls 66 may be provided. The material is thicker at the base of the valley 64 and gradually becomes thinner as it merges with the walls 68 of the strut 31. For instance, a variation of thickness of less than about 10% per unit length can be provided. According to one possible application, a variation of thickness of about 6% per unit length may be implemented.

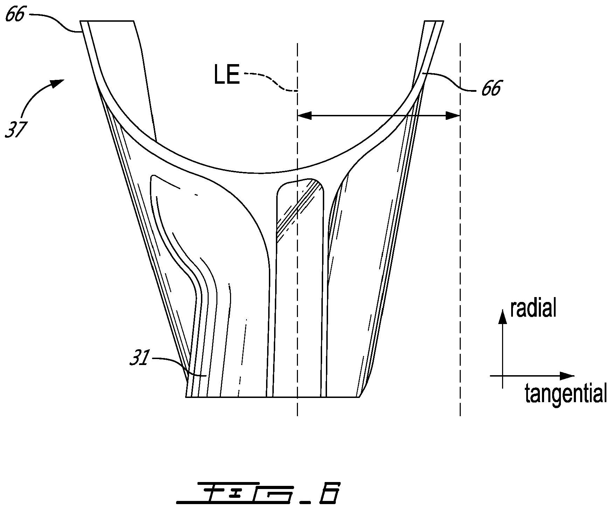

According to the embodiment shown in Fig. 6, the leading edge (LE) of TEC struts 31 may be positioned to minimize the offset between the strut 31 and the closest radial mixer wall 66. That is in the embodiment shown in Fig. 6; the strut 31 is non-centered relative to the valley of the inner lobe (the leading edge is laterally offset relative to a radial median between the sidewalls 66). The strut 31 is rather positioned generally closer to one of the inner lobe sidewalls 66 to provide for a more direct load path between the lobe sidewall and the strut.

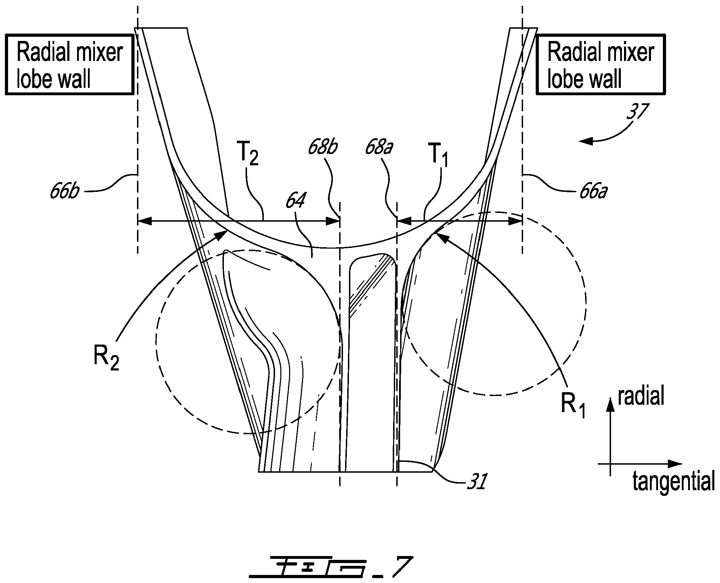

Furthermore, as shown in Fig. 7, at the radially outer end of the TEC struts 31, in the tangential direction (i.e. direction perpendicular to the axial and radial directions of the engine), the center of the fillet radii R1 and R2 may vary in relation to the distance T1 and T2 between the TEC strut position in the mixer valley and the corresponding radial mixer lobe wall 66a, 66b. For instance, according to the illustrated embodiment, the distance T2 is greater than distance T1 and the center of fillet radius R2 is spaced radially inwardly from the center of the fillet radius R1 and spaced further way from the associated side of the strut along the illustrated tangential axis. This provides for additional material on the side of the strut 31 that is disposed farther from the corresponding lobe wall 66(at the transition between walls 66b and 68b in the illustrated embodiment). From, Fig. 7, it can be appreciated that the wall profile thickness of the valley 64 is non-symmetric relative to a central radial axis of the lobe. As mentioned hereinabove, more material is provided on the side of the strut 31 which is farther from the associated lobe wall (there is more material on the left hand side haft of the valley in the embodiment depicted on Fig. 7). It is understood that the wall thickness profile of the valley is function of the positioning of the strut 31 relative to the lobe walls 66a, 66b.

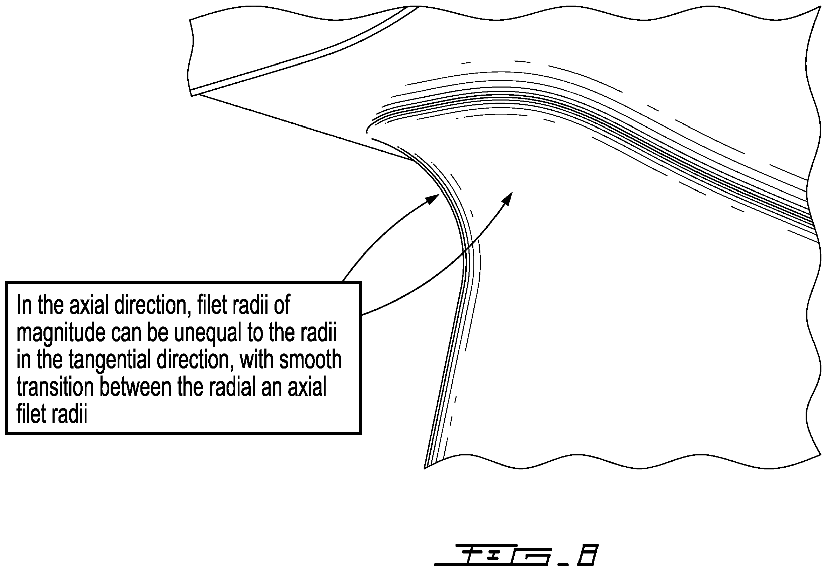

Referring now to Fig. 8, it can be appreciated that in the axial direction, the fillet radii of magnitude can be in general unequal to the radii in the tangential direction, with a smooth transition between the radial and axial fillet radii.

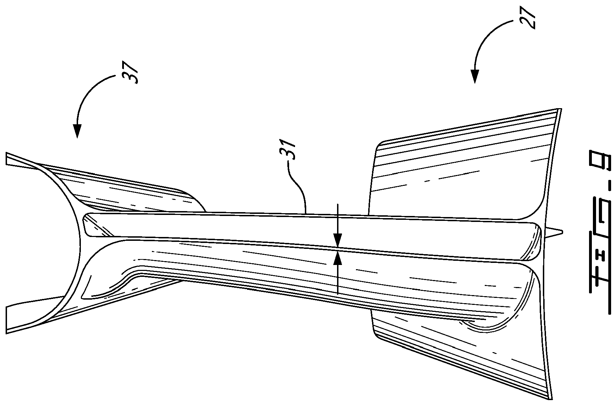

Also as shown in Fig. 9, each strut 31 may be provided in the form of a hollow TEC strut with thin walls, except in the area of the fillet radii between the TEC cone 27 and mixer lobe.

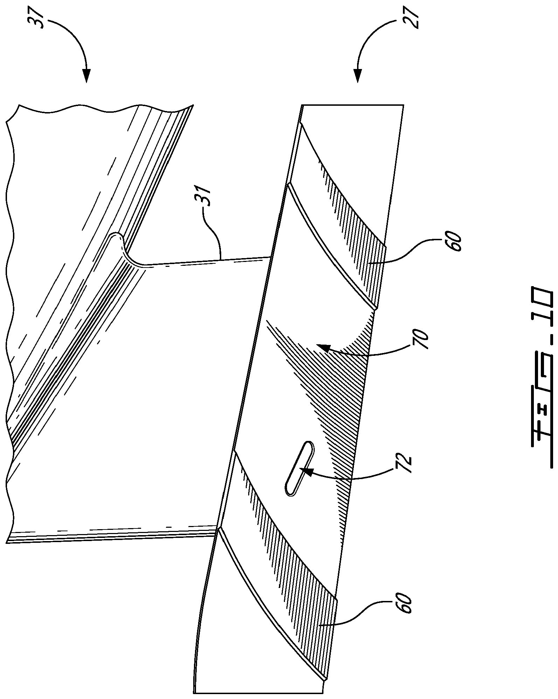

It is also contemplated to provide a platform 70 on the base of a hollow TEC strut 31, the platform 70 defining a small opening 72 for air/heat exchange in the TEC strut cavity (see figure 10). The opening has a surface area which is significantly smaller than a cross-section area of the internal volume of the strut. This provides for a more structural robust design compared to an open end strut. Cooling air can flow through the opening 72 to internally cool the hollow strut 31. The opening 72 can be minimized to maximize strength.

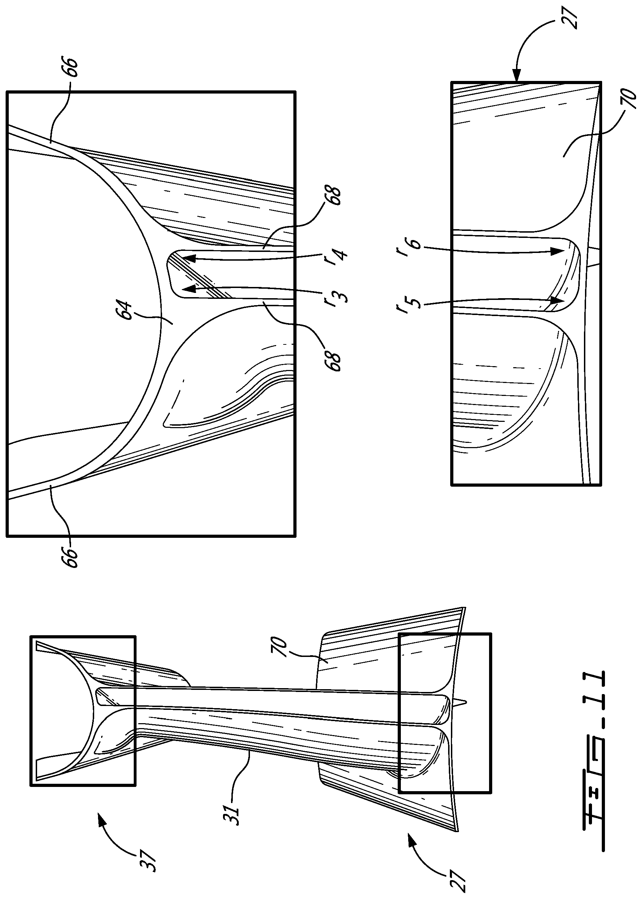

Also, as shown in the embodiment of Fig. 11, fillet radii r3, r4, r5, r6 may be defined on the inner side of the TEC strut walls 68 between the mixer lobe valley 64 and the platform 70 at the base (radially inner end) of each TEC strut. These internal fillets contribute to further strengthen the struts.

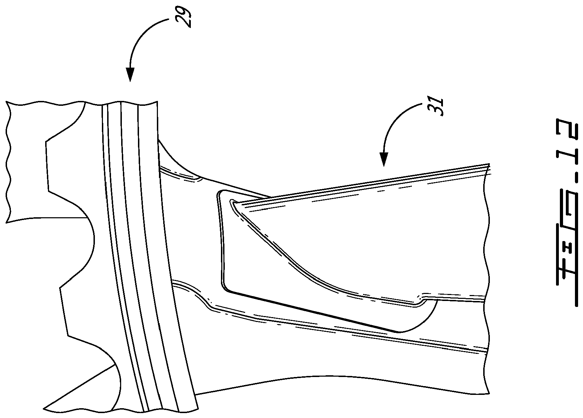

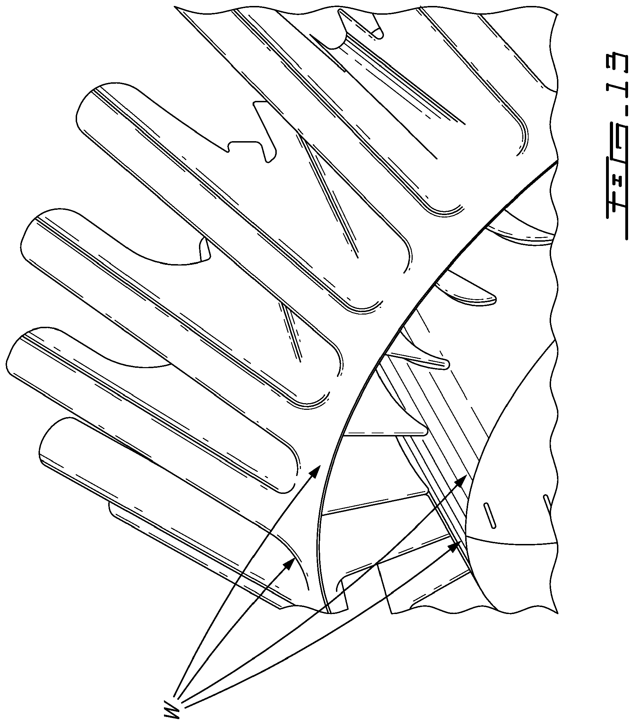

The features described herein above with respect to figures 3 to 11 can be created on the strut 31 and then assembled into a circumferential section of mixer 29 and TEC cone 27 via brazing, as for instance shown in figure 12. Alternately, the full strut, mixer & TEC cone can be manufactured into one circumferential section (figure 13). In both cases, the circumferential sections are welded together along weld lines W to form the integrated mixer/TEC.

The above description is meant to be exemplary only, and one skilled in the art will recognize that changes may be made to the embodiments described without departing from the scope of the invention disclosed. While all the inner lobes and associated struts could include all or some of the features disclosed in Figs. 3 to 12, it is understood that it is not necessary that all the inner lobes and struts need to be strengthened. For instance, the off-centre positioning of the leading edge of the struts could only be applied to some of the lobes of a given TEC mixer. Not all the lobes and struts needs to have the same features. Various combinations are contemplated. Modifications which fall within the scope of the present invention as defined in the appended claims will be apparent to those skilled in the art.

## Claims

1. A turbine exhaust case (TEC) mixer (25) comprising: an inner shroud (27), an outer shroud (29) including a multi-lobe mixer (37), the multi-lobe mixer (37) having circumferentially alternating inner and outer lobes, each of the inner lobes having a valley (64) and first and second sidewalls (66) extending radially outwardly from the valley (64), circumferentially spaced-apart struts (31) depending radially inwardly from the valley (64) of associated ones of the inner lobes, each strut (31) having a leading edge (61) and a trailing edge (63), wherein for at least one of the inner lobes, the leading edge (61) of an associated one of the struts (31) is off-centered between the sidewalls (66) of the at least one inner lobe as viewed in a plane containing the leading edge (61), wherein the leading edge (61) of the associated one of the struts (31) is closer to the first sidewall (66) than the second sidewall (66) of the at least one inner lobe;
**characterised in that**:
a wall thickness of the valley (64) is greater between the strut (31) and the second sidewall (66) than between the strut (31) and the first sidewall (66).

2. The TEC mixer (25) defined in claim 1, wherein a first fillet radius (R₁) is provided between the first sidewall (66) and the associated one of the strut (31), wherein a second fillet radius (R₂) is provided between the second sidewall (66) and the strut (31), and wherein a center of the second fillet radius (R₂) is spaced radially inwardly from a center of the first fillet radius (R₁).

3. The TEC mixer (25) defined in claims 1 or 2, wherein a wall thickness (t2) of the valley (64) is greater than a wall thickness (t1) of the first and second sidewalls (66).

4. The TEC mixer (25) defined in claim 3, wherein each of the struts (31) has a variable wall thickness profile including thickened end portions.

5. The TEC mixer (25) defined in claim 4, wherein stiffening bands (60) are provided on a radially inner face of the inner shroud below (27) the leading edge (61) and trailing edge (63) of the struts (31).

6. The TEC mixer (25) defined in claims 3, 4 or 5, wherein the wall thickness of each inner lobe gradually decreases as the valley (64) merges into the first and second sidewalls (66).

7. The TEC mixer (25) defined in any preceding claim, wherein the struts (31) are hollow, and wherein a radially inner end of each struts (31) is closed by a platform (70), and wherein an opening (72) is defined in the platform (70), the opening having a surface area which is smaller than a cross-sectional surface area of a hollow interior of the struts (31).

8. The TEC mixer (25) defined in any of the preceding claims wherein the struts (31) are hollow, and wherein internal fillets (r₃, r₄) are provided on an inner side of each strut (31) between the valleys (64) and the inner shroud (27).

9. A gas turbine engine (10) comprising a compressor (13,17) for pressurizing incoming air, a combustor (23) in which air compressed by the compressor (13,17) is mixed with fuel and ignited for generating a stream of combustion gases, a turbine (15,19) for extracting energy from the combustion gases, and a turbine exhaust case (TEC) mixer (25) as defined in claim 1 disposed downstream of the turbine (15,19).

10. The gas turbine engine (10) defined in claim 9, wherein the valley (64) of the at least some of the inner lobes has a non-symmetric thickness profile relative to a central radial axis of the at least some of the inner lobes.

11. The gas turbine engine (10) defined in claims 9 or 10, wherein a first fillet radius (R₁) is provided between the first sidewall (66) and the strut (31), wherein a second fillet radius (R₂) is provided between the second sidewall (66) and the strut (31), and wherein respective center of the first and second fillet radius (R₁, R₂) are non-symmetrically disposed relative to a central radial axis of the strut (31).

12. The gas turbine engine (10) defined in claim 11, wherein the center of the second fillet radius (R₂) is spaced radially inwardly from the center of the first fillet radius (R₁).

13. The gas turbine engine (10) defined in any one of claims 9 to 12, wherein stiffening bands (60) are provided on a radially inner face of the inner shroud (27) below a leading edge (61) and a trailing edge (63) of the at least some of the struts (31).

14. The gas turbine engine (10) defined in any one of claims 9 to 13, wherein the struts (31) are hollow, and wherein a radially inner end of each struts (31) is closed by a platform (70), and wherein an opening (72) is defined in the platform (70), the opening having a surface area which is smaller than a cross-sectional surface area of a hollow interior of the struts (31).

## Patentansprüche

1. Turbinenabgasgehäuse-(TEC-)mischer (25), umfassend: einen inneren Mantel (27), einen äußeren Mantel (29), umfassend einen mehrflügeligen Mischer (37), wobei der mehrflügelige Mischer (37) in Umfangsrichtung alternierende innere und äußere Flügel aufweist, wobei jeder der inneren Flügel eine Kehle (64) und erste und zweite Seitenwände (66) aufweist, die von der Kehle (64) radial nach außen verlaufen, in Umfangsrichtung beabstandete Streben (31) aufweist, die von der Kehle (64) eines zugehörigen inneren Flügels radial nach innen herunterhängen, wobei jede Strebe (31) eine Vorderkante (61) und eine Hinterkante (63) aufweist, wobei für mindestens einen der inneren Flügel die Vorderkante (61) einer zugehörigen Strebe (31) außermittig zwischen den Seitenwänden (66) des mindestens einen inneren Flügels in einer Ebene betrachtet, die die Vorderkante (61) enthält, liegt, wobei die Vorderkante (61) der zugehörigen Strebe (31) näher zur ersten Seitenwand (66) als zur zweiten Seitenwand (66) des mindestens einen inneren Flügels liegt;
**dadurch gekennzeichnet, dass**:
eine Wanddicke der Kehle (64) zwischen der Strebe (31) und der zweiten Seitenwand (66) größer ist als zwischen der Strebe (31) und der zweiten Seitenwand (66).

2. TEC-Mischer (25) nach Anspruch 1, wobei ein erster Ausrundungsradius (R₁) zwischen der ersten Seitenwand (66) und der zugehörigen Strebe (31) bereitgestellt wird, wobei ein zweiter Ausrundungsradius (R₂) zwischen der zweiten Seitenwand (66) und der Strebe (31) bereitgestellt wird und wobei ein Mittelpunkt des zweiten Ausrundungsradius (R₂) radial nach innen von einem Mittelpunkt des ersten Ausrundungsradius (R₁) beabstandet ist.

3. TEC-Mischer (25) nach Anspruch 1 oder 2, wobei eine Wanddicke (t2) der Kehle (64) größer ist als eine Wanddicke (t1) der ersten und der zweiten Seitenwand (66).

4. TEC-Mischer (25) nach Anspruch 3, wobei jede der Streben (31) ein variables Wanddickenprofil einschließlich verdickter Endabschnitte aufweist.

5. TEC-Mischer (25) nach Anspruch 4, wobei Versteifungsbänder (60) an einer radial inneren Seite des inneren Mantels (27) unter der Vorderkante (61) und der Hinterkante (63) der Streben (31) bereitgestellt werden.

6. TEC-Mischer (25) nach den Ansprüchen 3, 4 oder 5, wobei die Wanddicke jedes inneren Flügels schrittweise mit dem Übergang der Kehle (64) in die erste und die zweite Seitenwand (66) abnimmt.

7. TEC-Mischer (25) nach einem der vorstehenden Ansprüche, wobei die Streben (31) hohl sind und wobei ein radial inneres Ende jeder Strebe (31) von einer Plattform (70) verschlossen wird und wobei eine Öffnung (72) in der Plattform (70) abgegrenzt ist, wobei die Öffnung einen Flächeninhalt aufweist, der kleiner ist als ein Querschnittsflächeninhalt eines hohlen Innenraums der Streben (31).

8. TEC-Mischer (25) nach einem der vorstehenden Ansprüche, wobei die Streben (31) hohl sind und wobei innere Ausrundungen (r₃, r₄) an einer Innenseite jeder Strebe (31) zwischen den Kehlen (64) und dem inneren Mantel (27) bereitgestellt werden.

9. Gasturbinenmotor (10), umfassend einen Verdichter (13,17), um die einströmende Luft unter Druck zu setzen, eine Brennkammer (23), in der die vom Verdichter (13,17) verdichtete Luft mit Treibstoff vermischt wird und entzündet wird, um einen Strom an Verbrennungsgasen zu erzeugen, eine Turbine (15,19), um den Verbrennungsgasen Energie zu entziehen, und einen Turbinenabgasgehäuse-(TEC-)mischer (25) nach Anspruch 1, der der Turbine (15,19) nachgeschaltet angeordnet ist.

10. Gasturbinenmotor (10) nach Anspruch 9, wobei die Kehle (64) der mindestens einigen der inneren Flügel ein unsymmetrisches Dickenprofil in Bezug auf eine mittlere radiale Achse der mindestens einigen der inneren Flügel aufweist.

11. Gasturbinenmotor (10) nach Anspruch 9 oder 10, wobei ein erster Ausrundungsradius (R₁) zwischen der ersten Seitenwand (66) und der Strebe (31) bereitgestellt wird, wobei ein zweiter Ausrundungsradius (R₂) zwischen der zweiten Seitenwand (66) und der Strebe (31) bereitgestellt wird und wobei jeweilige Mittelpunkte des ersten und des zweiten Ausrundungsradius (R₁, R₂) nicht symmetrisch in Bezug auf eine mittlere radiale Achse der Strebe (31) angeordnet sind.

12. Gasturbinenmotor (10) nach Anspruch 11, wobei der Mittelpunkt des zweiten Ausrundungsradius (R₂) radial nach innen vom Mittelpunkt des ersten Ausrundungsradius (R₁) beabstandet ist.

13. Gasturbinenmotor (10) nach einem der Ansprüche 9 bis 12, wobei Versteifungsbänder (60) an einer radial inneren Seite des inneren Mantels (27) unter einer Vorderkante (61) und einer Hinterkante (63) der mindestens einigen der Streben (31) bereitgestellt werden.

14. Gasturbinenmotor (10) nach einem der Ansprüche 9 bis 13, wobei die Streben (31) hohl sind und wobei ein radial inneres Ende jeder Strebe (31) von einer Plattform (70) verschlossen wird und wobei eine Öffnung (72) in der Plattform (70) abgegrenzt ist, wobei die Öffnung einen Flächeninhalt aufweist, der kleiner ist als ein Querschnittsflächeninhalt eines hohlen Innenraums der Streben (31).

## Revendications

1. Mélangeur (25) à carter d'échappement de turbine (TEC) comprenant : un carénage intérieur (27), un carénage extérieur (29) incluant un mélangeur à lobes multiples (37), le mélangeur à lobes multiples (37) ayant des lobes intérieurs et extérieurs alternant circonférentiellement, chacun des lobes intérieurs ayant une vallée (64) et des première et deuxième parois latérales (66) s'étendant radialement vers l'extérieur depuis la vallée (64), des entretoises circonférentiellement espacées (31) pendant radialement vers l'intérieur depuis la vallée (64) de certains des lobes intérieurs associés, chaque entretoise (31) ayant un bord d'attaque (61) et un bord de fuite (63), dans lequel pour au moins un des lobes intérieurs, le bord d'attaque (61) d'une des entretoises (31) associée est décentré entre les parois latérales (66) de l'au moins un lobe intérieur tel que vu dans un plan contenant le bord d'attaque (61), dans lequel le bord d'attaque (61) de l'une des entretoises (31) associée est plus proche de la première paroi latérale (66) que de la deuxième paroi latérale (66) de l'au moins un lobe intérieur ; **caractérisé en ce que** :
une épaisseur de paroi de la vallée (64) est plus grande entre l'entretoise (31) et la deuxième paroi latérale (66) qu'entre l'entretoise (31) et la première paroi latérale (66).

2. Mélangeur à TEC (25) selon la revendication 1, dans lequel un premier rayon de congé (R₁) est fourni entre la première paroi latérale (66) et l'entretoise associée (31), dans lequel un deuxième rayon de congé (R₂) est fourni entre la deuxième paroi latérale (66) et l'entretoise (31), et dans lequel un centre du deuxième rayon de congé (R₂) est espacé radialement vers l'intérieur depuis un centre du premier rayon de congé (R₁).

3. Mélangeur à TEC (25) selon la revendication 1 ou 2, dans lequel une épaisseur de paroi (t2) de la vallée (64) est supérieure à une épaisseur de paroi (t1) des première et deuxième parois latérales (66).

4. Mélangeur à TEC (25) selon la revendication 3, dans lequel chacune des entretoises (31) a un profil d'épaisseur de paroi variable incluant des portions d'extrémité épaissies.

5. Mélangeur à TEC (25) selon la revendication 4, dans lequel des bandes de raidissement (60) sont fournies sur une face radialement intérieure du carénage intérieur (27) sous les bord d'attaque (61) et bord de fuite (63) des entretoises (31).

6. Mélangeur à TEC (25) selon les revendications 3, 4 ou 5, dans lequel l'épaisseur de paroi de chaque lobe intérieur diminue progressivement quand la vallée (64) fusionne dans les première et deuxième parois latérales (66).

7. Mélangeur à TEC (25) selon une quelconque revendication précédente, dans lequel les entretoises (31) sont creuses, et dans lequel une extrémité radialement intérieure de chaque entretoise (31) est fermée par une plateforme (70), et dans lequel une ouverture (72) est définie dans la plateforme (70), l'ouverture ayant une superficie qui est plus petite qu'une superficie en coupe transversale d'un intérieur creux des entretoises (31).

8. Mélangeur à TEC (25) selon l'une quelconque des revendications précédentes, dans lequel les entretoises (31) sont creuses, et dans lequel des congés internes (r₃, r₄) sont fournis sur un côté intérieur de chaque entretoise (31) entre les vallées (64) et le carénage intérieur (27).

9. Moteur à turbine à gaz (10) comprenant un compresseur (13, 17) pour mettre sous pression de l'air entrant, une chambre de combustion (23) dans laquelle de l'air comprimé par le compresseur (13, 17) est mélangé à du combustible et allumé pour générer un courant de gaz de combustion, une turbine (15, 19) pour extraire de l'énergie des gaz de combustion, et un mélangeur (25) à carter d'échappement de turbine (TEC) selon la revendication 1 disposé en aval de la turbine (15, 19).

10. Moteur à turbine à gaz (10) selon la revendication 9, dans lequel la vallée (64) d'au moins certains des lobes intérieurs a un profil d'épaisseur non symétrique par rapport à un axe radial central des au moins certains des lobes intérieurs.

11. Moteur à turbine à gaz (10) selon la revendication 9 ou 10, dans lequel un premier rayon de congé (R₁) est fourni entre la première paroi latérale (66) et l'entretoise (31), dans lequel un deuxième rayon de congé (R₂) est fourni entre la deuxième paroi latérale (66) et l'entretoise (31), et dans lequel les centres respectifs des premier et deuxième rayons de congé (R₁, R₂) sont disposés de manière non symétrique par rapport à un axe radial central de l'entretoise (31).

12. Moteur à turbine à gaz (10) selon la revendication 11, dans lequel le centre du deuxième rayon de congé (R₂) est espacé radialement vers l'intérieur depuis le centre du premier rayon de congé (R₁).

13. Moteur à turbine à gaz (10) selon l'une quelconque des revendications 9 à 12, dans lequel des bandes de raidissement (60) sont fournies sur une face radialement intérieure du carénage intérieur (27) sous un bord d'attaque (61) et un bord de fuite (63) des au moins certaines des entretoises (31).

14. Moteur à turbine à gaz (10) selon l'une quelconque des revendications 9 à 13, dans lequel les entretoises (31) sont creuses, et dans lequel une extrémité radialement intérieure de chaque entretoise (31) est fermée par une plateforme (70), et dans lequel une ouverture (72) est définie dans la plateforme (70), l'ouverture ayant une superficie qui est plus petite qu'une superficie en coupe transversale d'un intérieur creux des entretoises (31).
